# DEMANDE DE BREVET EUROPEEN

(11) **EP 3 381 720 A1**
(43) Date de publication de la demande: **03.10.2018**
(21) Numéro de dépôt: 18159087.8
(22) Date de dépôt: 28.02.2018
(51) Int. Cl.: B60G 7/00

(54) **ENSEMBLE POUR SUSPENSION DE VEHICULE COMPORTANT UNE ROTULE DE PIVOT VISSEE DANS LE TRIANGLE DE SUSPENSION**

(30) Priorité: 27.03.2017 FR 1752508
(71) Demandeur: PSA Automobiles SA, 78300 Poissy (FR)
(72) Inventeur: LE GUILLOU, Olivier, 25420 Courcelles les Montbeliard (FR); GIRAUD, Philippe, 25460 Etupes (FR); COURTOIS, Eric, 90000 Belfort (FR); PETITJEAN, Daniel, 70310 Amont et Effreney (FR); SALLERIN, Maxime, 90000 Belfort (FR)

(57) **Abrégé**

L'invention a pour objet un ensemble pour suspension de véhicule automobile, comportant un triangle inférieur de suspension (16) réalisé en tôle, et une rotule de pivot (10) comprenant un boîtier (56) recevant une sphère de rotule, caractérisé en ce que le triangle de suspension (16) comporte à son extrémité une palette (18) rapportée par soudure, présentant un perçage taraudé (38), et en ce que le boîtier de rotule (56) comporte un filetage extérieur (50) permettant son introduction par le dessus puis son vissage dans le perçage taraudé (38).

## Description

La présente invention concerne un ensemble pour suspension de véhicule automobile comportant un triangle de suspension équipé d'une rotule de pivot, ainsi qu'un procédé d'assemblage de cet ensemble dans le véhicule, et un véhicule automobile comportant un tel ensemble.

Un type d'ensemble pour suspension avant de véhicule automobile connu, en particulier pour une suspension du type « Mac Pherson », présenté notamment par le document FR-A1-2991633, comporte un porte-moyeu fixé à la base d'un amortisseur disposé verticalement, présentant une extrémité supérieure fixée à la caisse du véhicule.

La base du porte-moyeu est reliée par une rotule de pivot à l'extrémité extérieure d'un triangle de suspension fixé à un berceau avant du véhicule, par une articulation disposée suivant un axe longitudinal. L'axe passant par l'extrémité supérieure de l'amortisseur et la rotule de pivot, constitue l'axe du pivot de la direction.

Le côté extérieur du triangle de suspension réalisé en tôle, reçoit une palette formée dans une tôle qui est fixée par trois vis de serrage pouvant être disposées dans différents perçages de ce triangle. Le boîtier de la rotule est serti dans un perçage de la palette. Une tige liée à la sphère de la rotule et dépassant vers le haut, traverse un perçage disposé à la base du porte-moyeu, puis est serrée par un écrou vissé sur un filetage d'extrémité.

De cette manière on obtient en choisissant les perçages du triangle de suspension recevant les vis de serrage de la palette, un choix d'écartement des roues permettant de s'adapter avec les mêmes composants à différentes carrosseries du véhicule.

Le procédé d'assemblage de la suspension du véhicule est le suivant. La rotule de pivot est fixée sur le porte-moyeu avant le montage de l'arbre de transmission, pour laisser l'écrou de serrage de sa tige accessible par un outillage automatisé.

Après l'installation dans le véhicule du porte-moyeu comprenant l'arbre de transmission, et du triangle de suspension, la palette liée au boîtier de rotule est fixée sur ce triangle par les vis de serrage qui sont accessibles avec un outillage automatisé.

Un problème qui se pose avec ce type de suspension est que le système d'assemblage de la palette sur le triangle de suspension utilisant plusieurs vis de serrage, nécessite l'approvisionnement de ces vis avec leurs écrous et leurs rondelles, ce qui impose un temps d'assemblage assez long, et entraîne des coûts de production.

En variante l'utilisation d'une rotule directement sertie ou soudée sur le triangle de suspension, sans l'intermédiaire d'une palette fixée par les vis de serrage, nécessiterait la réalisation dans l'usine d'assemblage final du véhicule d'une opération de sertissage ou de soudure. Ce type d'opération n'est généralement pas compatible avec les exigences de fonctionnement des usines d'assemblage final.

Par ailleurs un type de suspension connu, présenté notamment par le document US-A-2848260, présente une rotule de pivot comportant un filetage sur le contour extérieur de son boîtier. La rotule de pivot est introduite par le dessous dans un perçage taraudé formé dans un rebord circulaire de la tôle du triangle de suspension qui s'étend suivant l'axe de ce perçage. Le filetage du boîtier est ensuite vissé ensuite dans le perçage.

Ce type de suspension nécessite une forme particulière réalisée à l'extrémité du triangle pour constituer le rebord étendu axialement, qui est complexe à produire. De plus l'introduction de la rotule dans le perçage du triangle par le dessous n'est pas compatible avec le procédé d'assemblage des véhicules présentés ci-dessus, car il faudrait accéder à la fin à l'écrou de serrage de cette rotule qui n'est pas accessible.

La présente invention a notamment pour but d'éviter ces problèmes de l'art antérieur.

Elle propose à cet effet un ensemble pour suspension de véhicule automobile, comportant un triangle inférieur de suspension réalisé en tôle, et une rotule de pivot comprenant un boîtier recevant une sphère de rotule, cet ensemble étant remarquable en ce que le triangle de suspension comporte à son extrémité une palette rapportée par soudure, présentant un perçage taraudé, et en ce que le boîtier de rotule comporte un filetage extérieur permettant son introduction par le dessus puis son vissage dans le perçage taraudé.

Un avantage de cet ensemble pour suspension est qu'en conservant un triangle de suspension fabriqué en tôle et couramment produit, et en rapportant à son extrémité par soudure la palette présentant une épaisseur suffisante pour former le perçage taraudé, on obtient de manière économique un nouveau triangle pouvant recevoir par le dessus la rotule de pivot présentant un filetage sur son boîtier.

Après la mise en place du porte-moyeu équipé de la rotule de pivot et du triangle de suspension sur le véhicule, la liaison finale entre eux se fait simplement en introduisant le boîtier de cette rotule au-dessus du perçage taraudé, et en le vissant.

L'ensemble pour suspension selon l'invention peut de plus comporter une ou plusieurs des caractéristiques suivantes, qui peuvent être combinées entre elles.

Avantageusement, le filetage extérieur du boîtier de rotule se termine vers le haut par un épaulement supérieur.

Avantageusement, la base du boîtier de rotule comporte une forme permettant son entraînement en rotation par un outil.

Dans ce cas, le boîtier de rotule peut comporter une empreinte d'entraînement disposée en-dessous du filetage extérieur, qui est inscrite dans le diamètre de ce filetage.

Avantageusement, la palette présente une forme sensiblement plate allongée transversalement et disposée horizontalement.

Dans ce cas, avantageusement la palette est insérée entre deux tôles formant des demi-coquilles du triangle de suspension.

Avantageusement, les deux tôles présentent au niveau de l'insertion de la palette une découpe centrale allongée transversalement, comportant sur le contour des soudures avec la palette.

Avantageusement, le centre de la sphère de la rotule de pivot est disposé à moins de 10mm du plan horizontal médian du triangle de suspension comportant son axe d'inertie.

L'invention a aussi pour objet un procédé d'assemblage dans le véhicule d'un ensemble pour suspension comprenant l'une quelconque des caractéristiques précédentes, comportant une étape de montage sur le véhicule d'un porte-moyeu équipé de la rotule de pivot et d'un arbre de transmission, en parallèle une étape de montage sur le véhicule du triangle de suspension, et ensuite une étape de vissage du boîtier de rotule sur ce triangle de suspension.

L'invention a de plus pour objet un véhicule automobile équipé d'un ensemble pour suspension comportant un triangle inférieur et une rotule de pivot, comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente un ensemble pour suspension selon l'art antérieur, comportant un porte-moyeu et un triangle de suspension ;
- la figure 2 présente la face inférieure de la palette de ce triangle ;
- la figure 3 présente un triangle d'un ensemble pour suspension selon l'invention ; et
- la figure 4 est une coupe axiale de la rotule de pivot de cet ensemble.

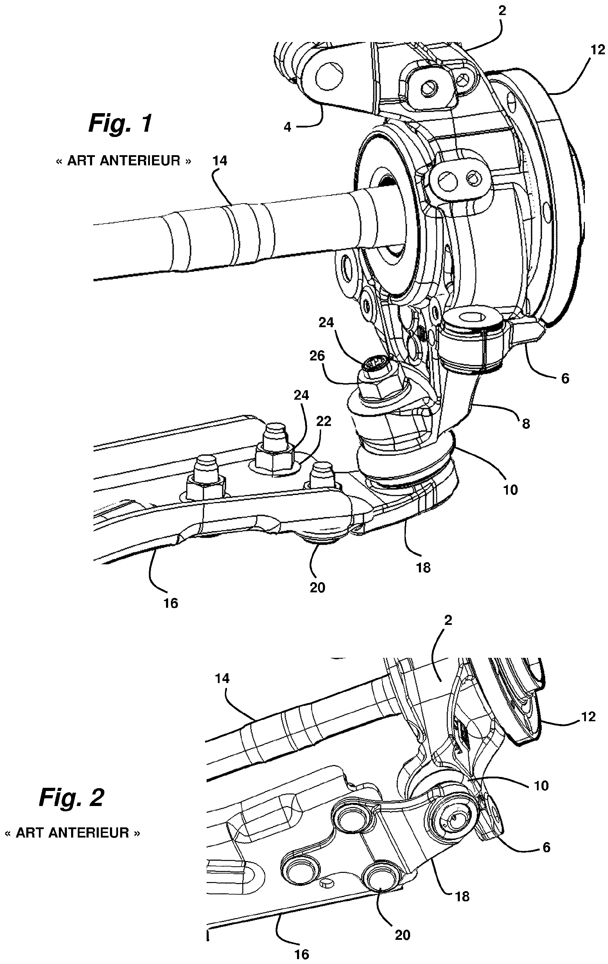

Les figures 1 et 2 présentent un porte-moyeu 2 comportant en partie supérieure des fixations 4 recevant la base d'un amortisseur, et vers l'arrière un bras de direction 6 recevant une rotule d'une biellette de direction.

Le porte-moyeu 2 comporte à sa base un bras inférieur 8 présentant un perçage sensiblement vertical, recevant la tige 24 d'une rotule de pivot 10 disposée en dessous, qui est serrée par un écrou 26 venant au-dessus.

Le porte-moyeu 2 supporte par l'intermédiaire de roulements un moyeu 12 recevant la roue du véhicule, qui est entraîné par un arbre de transmission 14 le traversant.

Un triangle inférieur de suspension 16 relié du côté intérieur par une articulation au berceau avant du véhicule, reçoit à son extrémité extérieure une palette 18 sensiblement plate qui est fixée sous ce triangle. La palette 18 comporte vers l'extérieur une forme creuse sur le dessus, constituant le boîtier de la rotule de pivot 10.

La fixation de la palette 18 comporte trois vis 20 venant en dessous de cette palette, recevant au-dessus du bras 16 successivement une rondelle 22 puis un écrou 24.

L'écrou 26 de la rotule de pivot 10 n'étant pas accessible après le montage de l'arbre de transmission 14, cette rotule avec sa palette 18 est assemblée sur le porte-moyeu 2 avant la pose de cet arbre.

Ensuite le porte-moyeu 2 d'une part et le triangle de suspension 16 d'autre part sont fixés sur le véhicule. En dernier les vis 20, les rondelles 22 et les écrous 24 sont mis en place, puis serrés pour terminer l'assemblage de la suspension. La liaison entre le porte-moyeu 2 et le triangle 16 comprenant la mise en place des vis 20, des rondelles 22 et des écrous 24, est relativement longue et délicate à mettre en place.

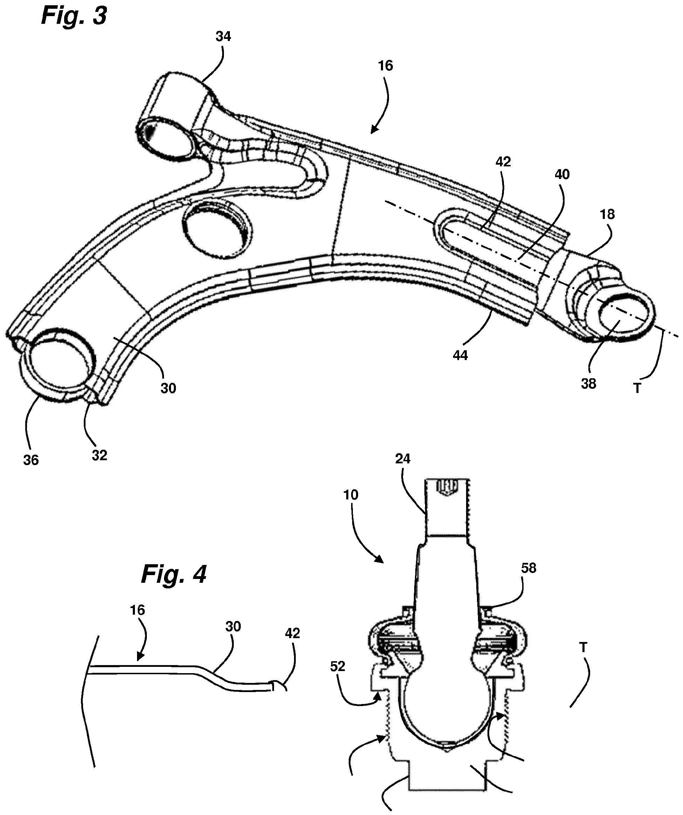

Les figures 3 et 4 présentent un triangle de suspension 16 formé par une tôle supérieure 30 et une tôle inférieure 32 sensiblement symétriques, constituant des coquilles superposées et soudées sur leurs contours de manière à former un caisson rigide.

Le triangle 16 comporte du côté intérieur vers l'avant un anneau présentant un axe longitudinal 34, et vers l'arrière un anneau présentant un axe vertical 36, recevant des éléments élastiques fixés au berceau avant du véhicule, formant un pivot longitudinal.

Le triangle 16 présente du côté extérieur une forme transversale 44 qui est allongée suivant un axe transversal T du véhicule. Une palette 18 formée par une tôle emboutie, présentant une direction allongée suivant l'axe transversal T, est insérée du côté extérieur dans la forme allongée transversale 44 du triangle 16, entre les deux tôles 30, 32.

La palette 18 présente du côté extérieur un perçage 38 comportant un taraudage intérieur. La palette 18 est simple à réaliser par emboutissage et découpe d'une tôle. On notera que la palette 18 ne comporte pas la fonction de boîtier de la rotule de pivot, comme pour la palette du système selon l'art antérieur.

Chaque tôle 30, 32 présente dans sa forme allongée transversale 44 une découpe centrale allongée 40, les rebords de cette découpe étant cintrés pour venir en appui sur la palette 18. Un cordon de soudure 42 est formé sur l'ensemble du contour de la découpe centrale 40 de chaque tôle 30, 32, de manière à assurer une liaison très rigide entre la palette 18 et le triangle 16 qui s'étend sur une grande longueur dans la direction transversale.

Le boîtier 56 de la rotule de pivot 10 comporte un filetage extérieur 50 disposé suivant l'axe de la tige 24, qui se termine au-dessus par un épaulement circulaire supérieur 52. Une forme hexagonale 54 réalisée en dessous du filetage 50, est inscrite dans le diamètre de ce filetage.

Après avoir fixé sur le véhicule d'une part le porte-moyeu 2 équipé de la rotule de pivot 10 fixé par son écrou 26, et de l'arbre de transmission 14, et d'autre part le triangle de suspension 16 avec sa palette 18, la forme hexagonale 54 du boîtier de rotule 56 est introduite dans le perçage 38 de la palette 18, de manière à dépasser un peu en dessous de cette palette.

Un opérateur ajuste ensuite un outil de serrage sur la forme hexagonale 54, puis tourne le boîtier 56 avec cet outil pour visser le filetage 50 dans le taraudage du perçage 38 de la palette 18. On obtient une rotation du boîtier 56 et de son joint d'étanchéité 58 sur la sphère de la rotule et sur la tige 24, qui n'abîme pas cette rotule.

Le boîtier 56 descend dans le perçage 38 de la palette 18, jusqu'à ce que son épaulement supérieur 52 vienne se serrer en appui sur le dessus de cette palette.

En prévoyant un centre de la sphère de rotule disposé suivant l'épaisseur, sensiblement dans le plan horizontal médian du triangle de suspension 16 comportant son axe d'inertie, en particulier à moins de 10mm de ce plan, on évite la formation d'un bras de levier ce qui réduit les contraintes appliquées sur ce triangle, en particulier les couples. De cette manière on peut alléger le triangle de suspension 16.

L'assemblage de la rotule de pivot 10 sur le triangle de suspension 16 est rapide avec un temps de cycle court, simple et efficace, sans nécessiter de pièce rapportée pour former cette liaison. La résistance de la liaison peut être élevée. Le procédé mis en oeuvre est tout à fait compatible avec les moyens couramment utilisés des usines d'assemblage des véhicules.

## Revendications

1. - Ensemble pour suspension de véhicule automobile, comportant un triangle inférieur de suspension (16) réalisé en tôle, et une rotule de pivot (10) comprenant un boîtier (56) recevant une sphère de rotule, **caractérisé en ce que** le triangle de suspension (16) comporte à son extrémité une palette (18) rapportée par soudure, présentant un perçage taraudé (38), et **en ce que** le boîtier de rotule (56) comporte un filetage extérieur (50) permettant son introduction par le dessus puis son vissage dans le perçage taraudé (38).

2. - Ensemble pour suspension selon la revendication 1, **caractérisé en ce que** le filetage extérieur (50) du boîtier de rotule (56) se termine vers le haut par un épaulement supérieur (52).

3. - Ensemble pour suspension selon la revendication 1 ou 2, **caractérisé en ce que** la base du boîtier de rotule (56) comporte une forme permettant son entraînement en rotation par un outil.

4. - Ensemble pour suspension selon la revendication 3, **caractérisé en ce que** le boîtier de rotule (56) comporte une empreinte d'entraînement (54) disposée en-dessous du filetage extérieur (50), qui est inscrite dans le diamètre de ce filetage (50).

5. - Ensemble pour suspension selon l'une quelconque des revendications précédentes, **caractérisé en ce que** la palette (18) présente une forme sensiblement plate allongée transversalement et disposée horizontalement.

6. - Ensemble pour suspension selon la revendication 5, **caractérisé en ce que** la palette (18) est insérée entre deux tôles (30, 32) formant des demi-coquilles du triangle de suspension (16).

7. - Ensemble pour suspension selon la revendication 6, **caractérisé en ce que** les deux tôles (30, 32) présentent au niveau de l'insertion de la palette (18) une découpe centrale allongée transversalement (40), comportant sur le contour des soudures (42) avec la palette (18).

8. - Ensemble pour suspension selon l'une quelconque des revendications précédentes, **caractérisé en ce que** le centre de la sphère de la rotule de pivot (10) est disposé à moins de 10mm du plan horizontal médian du triangle de suspension (16) comportant son axe d'inertie.

9. - Procédé d'assemblage dans le véhicule d'un ensemble pour suspension selon l'une quelconque des revendications précédentes, **caractérisé en ce qu'**il comporte une étape de montage sur le véhicule d'un porte-moyeu (2) équipé de la rotule de pivot (10) et d'un arbre de transmission (14), en parallèle une étape de montage sur le véhicule du triangle de suspension (16), et ensuite une étape de vissage du boîtier de rotule (56) sur ce triangle de suspension (16).

10. - Véhicule automobile équipé d'un ensemble pour suspension comportant un triangle inférieur (16) et une rotule de pivot (10), **caractérisé en ce que** cet ensemble est selon l'une quelconque des revendications 1 à 8.
